# EUROPÄISCHE PATENTSCHRIFT

(11) **EP 3 418 861 B1**
(45) Veröffentlichungstag und Bekanntmachung des Hinweises auf die Patenterteilung: **11.05.2022**
(21) Anmeldenummer: 18150733.6
(22) Anmeldetag: 09.01.2018
(51) Int. Cl.: G06F 3/01

(54) **VERFAHREN ZUM BETREIBEN EINER ANZEIGEVORRICHTUNG SOWIE EIN KRAFTFAHRZEUG**
METHOD FOR OPERATING A DISPLAY DEVICE, AND A MOTOR VEHICLE
PROCÉDÉ DE FONCTIONNEMENT D'UN DISPOSITIF D'AFFICHAGE AINSI QU'UN VÉHICULE AUTOMOBILE

(30) Priorität: 21.06.2017 DE 102017113763
(43) Veröffentlichungstag der Anmeldung: 26.12.2018
(73) Patentinhaber: Motherson Innovations Company Limited, London EC2N 2AX (GB)
(72) Erfinder: RÖTZER, Ilka, 70327 Stuttgart (DE); WIECZOREK, Romeo, 70327 Stuttgart (DE); LIESENER, Alf, 70327 Stuttgart (DE); GÖTTLICHER, Stefanie, 70327 Stuttgart (DE)
(74) Vertreter: Weber-Bruls, Dorothée

(56) Entgegenhaltungen:
- DE-A1-102007 049 710
- DE-A1-102011 112 447
- DE-A1-102015 122 489
- US-A1- 2017 090 566

## Beschreibung

Die Erfindung betrifft ein Verfahren zum Betreiben einer Anzeigevorrichtung für ein Kraftfahrzeug, nach dem Oberbegriff von Anspruch 1 sowie ein Kraftfahrzeug mit einer Steuereinrichtung, welche zum Ausführen eines derartigen Verfahrens ausgelegt ist.

In modernen Kraftfahrzeugen wird eine zunehmende Anzahl elektronischer (digitaler) Anzeigeflächen verbaut, die zum einen die klassische analoge Instrumentierung des Kraftfahrzeugs ersetzen sollen, und zum anderen zusätzliche Informationen, wie beispielweise Kartenansichten, Bedienoberflächen für Unterhaltungs- und Telekommunikationssysteme und dergleichen bereitstellen können.

Es hat sich dabei herausgestellt, dass die Bedienung solcher Anzeigeflächen durch klassische Eingabegeräte, wie beispielsweise Tasten, Joysticks, Touchpads oder dergleichen, sehr komplex ist und daher einerseits zu Fehleingaben seitens des Fahrers führen kann und andererseits ein hohes Ablenkungsrisiko für den Fahrer mit sich bringt.

Aus diesem Grunde ist es wünschenswert, möglichst einfache berührungsfreie Eingabemethoden bereitzustellen. So ist beispielsweise aus der US 9 244 527 B2 eine Bedienvorrichtung für eine blickrichtungsabhängige Gestensteuerung bekannt. Die Blickrichtung des Benutzers wählt dabei ein Zielgerät oder eine Funktion aus, welche von einer folgenden Gesteneingabe betroffen sein soll.

Ein Verfahren und ein System zur Unterstützung eines Benutzers bei der Interaktion mit einer grafischen Benutzeroberfläche gemäß der US 2017/0090566 A1 kombiniert blickbasierte Eingaben mit gestenbasierten Benutzerbefehlen. Ein Benutzer eines Computersystems ohne einen herkömmlichen Touchscreen kann dabei mit grafischen Benutzeroberflächen auf eine Touchscreen-artige Weise interagieren, indem er eine Kombination aus blickbasierten Eingaben und gestenbasierten Benutzerbefehlen verwendet, und zwar unter Verzicht auf eine Berührung.

Die DE 10 2007 049 710 A1 betrifft ein Verfahren zum visuellen Auslösen eines Vorgangs in einem Kraftfahrzeug durch Blickrichtungserfassung eines Fahrzeuginsassen. Es ist dabei vorgesehen, dass der Vorgang als ein Bedienen eines Bedienelements des Kraftfahrzeugs durchgeführt wird und dass der Fahrzeuginsasse das Bedienelement zum bedienenden Auslösen eine vorgegebene Zeitspanne ansieht. Es kann aber auch vorgesehen sein, dass mittels mindestens einer Kamera eine Blickrichtungserfassung des Fahrzeuginsassen erfolgt und dass der Vorgang als ein Bedienen eines Bedienelements des Kraftfahrzeugs erfolgt, wenn der Fahrzeuginsasse das Bedienelement zum bedienenden Auslösen eine vorgegebene Zeitspanne ansieht und ein weiteres konstruktives Bedienelement betätigt.

Aus der DE 10 2011 112 447 A1 ist weiterhin ein Verfahren zum Bereitstellen einer graphischen Nutzerschnittstelle in einem Fahrzeug bekannt, bei dem ein graphisches Objekt in einem Anzeigebereich außerhalb der Reichweite eines Nutzers dargestellt wird, in einem von dem Anzeigebereich räumlich getrennten Detektionsraum eine Geste des Nutzers erfasst wird, das graphische Objekt ausgewählt wird und eine der Geste zugeordnete Interaktion mit dem Objekt ausgeführt wird. Hierbei kann eine erste Phase der Geste auf einer berührungsempfindlichen Oberfläche in Reichweite des Nutzers erfasst werden und eine zweite Phase der Geste berührungslos im Raum fortgesetzt werden.

Es hat sich herausgestellt, dass die reine Gesteneingabe vielfach zu Fehlbedienungen führen kann. Insbesondere kann es vorkommen, dass fälschlicherweise zufällige Gesten, die an sich nicht als Bedieneingaben gedacht sind, als solche erkannt werden, sodass der Inhalt von Anzeigeflächen ungewollt durch den Fahrer des Kraftfahrzeugs verändert wird. Auch benötigen gestenbasierte Eingabesysteme oftmals eine Vielzahl von unterschiedlichen Gesten, die für den Benutzer oft schwer in Erinnerung zu behalten sind. Auch dies kann zu Fehleingaben und zu Ablenkung führen.

Es ist somit die Aufgabe der vorliegenden Erfindung, das bekannte Verfahren zum Betreiben einer Anzeigevorrichtung derart weiterzuentwickeln, dass die Nachteile des Stands der Technik überwunden werden. Somit werden ein Verfahren sowie ein Kraftfahrzeug der eingangs genannten Art bereitgestellt, mittels welchen die Bedienung von Anzeigeflächen im Kraftfahrzeug erleichtert werden.

Diese das Verfahren betreffende Aufgabe wird durch die Merkmale des Kennzeichens des Patentanspruchs 1 gelöst. Die Unteransprüche beschreiben bevorzugte Ausführungsformen der Erfindung, sowohl betreffend das Verfahren als auch das Kraftfahrzeug.

Es wird also ein Verfahren zum Betreiben einer Anzeigevorrichtung, insbesondere für ein Kraftfahrzeug, welches eine Mehrzahl von Anzeigeflächen umfasst, geliefert, bei dem zum Auswählen zumindest eines Anzeigeelements auf einer ersten Anzeigefläche eine erste Eingabehandlung eines Benutzers in Form einer Berührung erfasst wird; und zum zumindest einmaligen Verschieben des zumindest einen ausgewählten Anzeigeelements von der ersten Anzeigefläche auf zumindest eine zweite Anzeigefläche zumindest eine zweite berührungslose Eingabehandlung des Benutzers erfasst wird.

Durch die erfindungsgemäße Kombination von Eingabehandlungen mit und ohne Berührung wird eine besonders intuitive Bedienung ermöglicht.

Es kann erfindungsgemäß vorgesehen sein, dass eine Vielzahl von zweiten berührungslosen Eingabehandlungen bereitgestellt wird, und/oder eine zweite berührungslose Eingabehandlung durch eine dritte berührungslose Eingabehandlung verifizierte wird, wobei sich vorzugsweise die zweiten und dritten berührungslosen Eingabehandlungen voneinander unterscheiden und/oder die zweiten und/oder dritten berührungslosen Eingabehandlungen von dem Benutzer ausgewählt und/oder geändert werden können.

Durch die Verifizierung der zweiten berührungslosen Eingabehandlung durch die dritte berührungslose Eingabehandlung kann sichergestellt werden, dass ungewollte Fehleingaben durch den Benutzer reduziert oder ganz vermieden werden. Damit wird ein besonders zuverlässiges Verfahren zum Betreiben einer Anzeigevorrichtung geschaffen.

Bevorzugt ist dabei, dass die berührungslosen Eingabehandlungen bestimmt werden durch
- eine für den Kopf des Benutzers charakteristische Größe, insbesondere umfassend eine Blickrichtung, eine Augenposition, eine Irisposition, eine Pupillenposition, eine Nasenposition, eine Kopfhaltung, eine Kopfposition, eine Kopforientierung und/oder einen Gesichtsausruck des Benutzers, oder
- eine für den Rumpf des Benutzers charakteristische Größe, insbesondere umfassend eine Körperhaltung, eine Körperposition, eine Körperorientierung, eine Schulterposition und/oder eine Schulterorientierung des Benutzers, oder
- eine für eine Hand und/oder zumindest einen Finger des Benutzers charakteristische Größe, insbesondere umfassend eine Geste, wie ein Vorbeistreichen, Annähern, Wegbewegen, Finger-Spreizen, Finger-Krümmen, Finger-Berühren und/oder Faust-Bilden, und/oder eine Finger- und/oder Hand-Position und/oder Finger- und/oder Handorientierung, oder
- eine für den Mund des Benutzers charakteristische Größe, insbesondere umfassend eine Lippenbewegung, ein Geräusch und/oder einen Sprachbefehl.

Zum Erfassen der zweiten berührungslosen Eingabehandlung kann zumindest eine für den Kopf des Benutzers charakteristische Größe erfasst werden, und zum Verifizieren kann als die dritte berührungslosen Eingabehandlung zumindest eine für den Rumpf des Benutzers charakteristische Größe erfasst werden, oder vice versa.

Zum Erfassen der berührungslosen Eingabehandlungen kann zumindest eine für die Hand, den oder die Finger und/oder den Mund des Benutzers charakteristische Größe erfasst werden.

Eine blickrichtungsabhängige Auswahl des zumindest einen Anzeigeelements auf der ersten Anzeigefläche erfordert ein Minimum an Aktivität des Benutzers und ist somit besonders komfortabel.

Die Gestensteuerung dient gemäß der Erfindung vornehmlich zur Durchführung einer vorbestimmten Aktion, nämlich einem Verschieben. Damit wird es ermöglicht, mit wenigen, besonders einfachen Gesten auszukommen, die für den Benutzer leicht in Erinnerung zu behalten sind. Auch kann einfach durch eine Mehrfachgestik, beispielsweise durch mehrmalige Wischbewegungen der Hand, ein Verschieben über mehrere Anzeigeelemente erfolgen.

Die Verifikation einer jeden berührungslosen Eingabehandlung, bevorzugt der Blickrichtung des Benutzers, durch dessen Körperposition bzw. Körperorientierung als weitere berührungslose Eingabehandlung kann sicherstellen, dass zufällige Augenbewegungen (beispielsweise ein schneller Seitenblick zum Beifahrer) nicht bereits als Eingabehandlung gewertet werden. Dies verbessert die Zuverlässigkeit der Bedienung der Anzeigevorrichtung. Es ist zudem bevorzugt, wenn als weitere berührungslose Eingabehandlung eine Gehirnaktivität des Benutzers und/oder eine Spracheingabe des Benutzers erfasst werden. Dies kann sowohl zu einer weiteren Verifikation der bereits beschriebenen Bedienhandlungen verwendet werden, als auch dazu dienen, die Bedienhandlungen zusätzlich zu modifizieren.

Zum zumindest einmaligen Verschieben des zumindest einen ausgewählten Anzeigeelements innerhalb der ersten Anzeigefläche kann zumindest eine vierte, berührungslose Eingabehandlung des Benutzers erfasst werden, vorzugsweise in Form eines Vorbeistreichens oder über ein Drag-und-Drop.

Bevorzugt ist gemäß der Erfindung, dass das zumindest eine Anzeigeelement auf der ersten Anzeigefläche ausgewählt wird, wenn die erste Eingabehandlung innerhalb einer ersten Zeitspanne erfasst wird, und/oder das zumindest eine ausgewählte Anzeigeelement von der ersten Anzeigefläche auf eine zweite Anzeigefläche verschoben, wenn die zweite berührungslose Eingabehandlung innerhalb einer zweiten Zeitspanne erfasst wird, und/oder das zumindest eine ausgewählte Anzeigeelement innerhalb der ersten Anzeigefläche verschoben wird, wenn die vierte Eingabehandlung innerhalb einer vierten Zeitspanne erfasst wird.

Mit der Erfindung wird ferner vorgeschlagen, dass das Verschieben rückgängig gemacht wird durch eine fünfte berührungslose Eingabehandlung des Benutzers, die sich vorzugsweise von der zweiten, dritten und/oder vierten Eingabehandlung des Benutzers unterscheidet, oder durch Betätigung einer Eingabeeinrichtung.

Beim Verschieben des zumindest einen Anzeigeelements kann dasselbe vergrößert werden und/oder eine Zusatzinformation zu dem zumindest einen Anzeigeelement angezeigt werden und/oder in ein Untermenü zu dem zumindest einen Anzeigeelement gewechselt werden. Als Alternative kann beim Verschieben des zumindest einen Anzeigeelements dasselbe verkleinert werden und/oder weniger Information zu dem zumindest einen Anzeigeelement angezeigt werden und/oder das zumindest einen Anzeigeelement aus der Blickrichtung des Benutzers und/oder in einen Hintergrund gelangen. Dies ermöglicht ein Blättern oder Scrollen zwischen Menüebenen, selbst in einer Menü-Hierarchie. Über ein Hauptmenü lässt sich so bspw. eine Navi-Information als Untermenü an einer ausgewählten Stelle im Kraftfahrzeug anzeigen. Ebenso ist es möglich, nicht benötigte Anzeigen bspw. zu einem Telefonbuch während eines Navigierens in einen Hintergrund zu schieben, wo es den Benutzer nicht stört.

Erfindungsgemäße Verfahren sind dadurch gekennzeichnet, dass das Verschieben des zumindest einen ausgewählten Anzeigeelements einen ersten Verschiebeschritt innerhalb der ersten Anzeigefläche und einen zweiten Verschiebeschritt von der ersten Anzeigefläche auf die zumindest eine zweite Anzeigefläche umfasst, wobei das Verschieben auch einen dritten Verschiebeschritt innerhalb der zumindest einen zweiten Anzeigefläche umfasst. Dabei werden der erste Verschiebeschritt auf der ersten Anzeigefläche und der dritte Verschiebeschritt auf der zumindest einen zweiten Anzeigefläche visualisiert, vorzugsweise in Echtzeit und/oder abhängig von der Dauer und/oder Geschwindigkeit der zweiten berührungslosen Eingabehandlung. Ferner wird der zweite Verschiebeschritt von der ersten Anzeigefläche auf die zumindest eine zweite Anzeigefläche auf der ersten Anzeigefläche, vorzugsweise in einem Randbereich benachbart zu der zumindest einen zweiten Anzeigefläche, visualisiert, vorzugsweise in Echtzeit und/oder abhängig von der Dauer und/oder Geschwindigkeit der zweiten berührungslosen Eingabehandlung.

Bevorzugt ist dabei, dass der erste, zweite und/oder dritte Verschiebeschritt durch eine optische Hervorhebung, wie durch ein Aufblinken, ein Vergrößern, ein Umkasteln, ein Hin- und Herbewegen und/oder eine Markierung, und/oder eine Darstellung, insbesondere repräsentierend eine Straße, einen Pfad, einen Fluss, eine Brücke, einen Tunnel und/oder ein Tor, visualisiert wird.

Der erste Verschiebeschritt kann z.B. durch die Bewegung des zumindest einen ausgewählten Anzeigeelements längs eines Pfads auf der ersten Anzeigefläche angezeigt werden, während der zweite Verschiebeschritt durch das Anzeigen eines Tunnels, der von dem zumindest einen ausgewählten Anzeigeelement passiert wird, verdeutlicht werden kann, und zwar vorzugsweise mit einem ersten Teil des Tunnels auf der ersten Anzeigefläche und einem zweiten Teil des Tunnels auf der zweiten Anzeigefläche, wobei der dritte Verschiebeschritt, soweit existent, wieder durch einen Pfad, jedoch auf der zweiten Anzeigefläche, visualisiert werden kann. Zudem kann das zumindest eine ausgewählte Anzeigeelement während der Verschiebeschritte mit einer Markierung zur Veranschaulichung eben des Verschiebens versehen werden, wobei die Markierung beliebig ausgestaltet werden kann, z.B. durch eine Unterstreichung.

Zudem ist es erfindungsgemäß vorgesehen, dass der Schritt des Auswählens des zumindest einen Anzeigeelements Folgendes umfasst: ein Vorauswählen des zumindest einen Anzeigeelements durch ein einmaliges Antippen des zumindest einen Anzeigeelements, ein optisches Hervorheben des vorausgewählten zumindest einen Anzeigeelements, wie durch ein Aufblinken, ein Vergrößern, ein Umkasteln, ein Hin- und Herbewegen und/oder eine Markierung, und ein Bestätigen des vorausgewählten zumindest einen Anzeigeelements durch eine zumindest eine bestimmte Zeitdauer dauernde Berührung oder in Form eines wiederholten Antippens.

Die Visualisierung einer Vorauswahl lässt Bedienfehler erheblich reduzieren, wobei durch eine optische Hervorhebung, bspw. durch ein schnelles Hin- und Herbewegen, also ein Zittern, zudem die Aufmerksamkeit beim Bedienen gesteigert werden kann. Das Zitteren kann dabei als eine Art Hallo-Effekt zudem ein positives Gefühl erwecken. Die Notwendigkeit der Bestätigung einer Vorauswahl erzwingt eine Überprüfung von Eingabehandlungen, so dass selbst eine fehlerfreie Bedienung gewährleistet werden kann.

Die Erfindung betrifft ferner einen Kraftfahrzeug mit einer Anzeigevorrichtung mit einer Mehrzahl von Anzeigeflächen, zumindest einem Sensor zur Erfassung einer berührungslosen Eingabehandlung und einer Steuereinrichtung, welche zum Durchführen eines Verfahrens der beschriebenen Art ausgebildet ist.

Die erste Anzeigeflächen kann dabei von einem Touchscreen-Monitor, insbesondere auf der Mittelkonsole des Kraftfahrzeugs, umfasst sein. Die zumindest eine zweite Anzeigefläche kann eine Projektionsfläche, ein Head-Up-Display, ein flexibles OLED-Display, ein Flüssigkristalldisplay, lichttechnisches Gewebe und/oder lichttechnische Folien, insbesondere in Form eines Dachhimmelmonitors, Innenverkleidungsteilmonitors, eines linken Türmonitor, eines linken Hauptmonitors, eines rechten Hauptmonitors und/oder eines rechten Türmonitors, umfassen, und/oder die zumindest eine zweite Anzeigefläche kann in einem Armaturenbrett, auf einer Windschutzscheibe, in einem Dachhimmel und/oder in der Mittelkonsole angeordnet sein, wobei vorzugsweise der linke und rechte Hauptmonitor im Armaturenbrett bereitgestellt sind.

Schließlich wird noch vorgeschlagen, dass das zumindest eine Anzeigeelement ein Icon und/oder ein Menüeintrag und/oder ein Gesamtinhalt der ersten Anzeigefläche und/oder ein ausgewählter Teilbereich der ersten Anzeigefläche ist. Nachfolgend werden bevorzugte Ausführungsformen der vorliegenden Erfindung unter Bezug auf die Zeichnungen beispielhaft näher erläutert, in denen
- Fig. 1: eine schematische Darstellung eines Kraftfahrzeugs zeigt, welches zur Durchführung eines Ausführungsbeispiels des erfindungsgemäßen Verfahrens ausgebildet ist;
- Fig. 2: eine schematische Darstellung der Erfassung von berührungslosen Bedienhandlungen im Rahmen eines Ausführungsbeispiels des erfindungsgemäßen Verfahrens darstellt;
- Fig. 3: eine schematische Darstellung des Durchführens einer Bedienhandlung im Rahmen eines Ausführungsbeispiels des erfindungsgemäßen Verfahrens darstellt;
- Fig. 4: eine weitere schematische Darstellung der Durchführung einer Bedienhandlung im Rahmen eines weiteren Ausführungsbeispiels des erfindungsgemäßen Verfahrens zeigt, und
- Fig. 5: eine Anzeigevorrichtung eines erfindungsgemäßen Kraftfahrzeugs.

Ein im Ganzen mit 10 bezeichnetes, erfindungsgemäßes Kraftfahrzeug umfasst eine erste Kamera 12, die in einem Armaturenbrett 14 angeordnet ist, sowie eine zweite Kamera 16, die am Übergang zwischen einer Windschutzscheibe 18 und dem Dach 20 des Kraftfahrzeugs 10 eingebaut ist. Die Kamera 16 kann dabei beispielsweise auch in einen Innenrückspiegel des Kraftfahrzeugs 10 integriert werden.

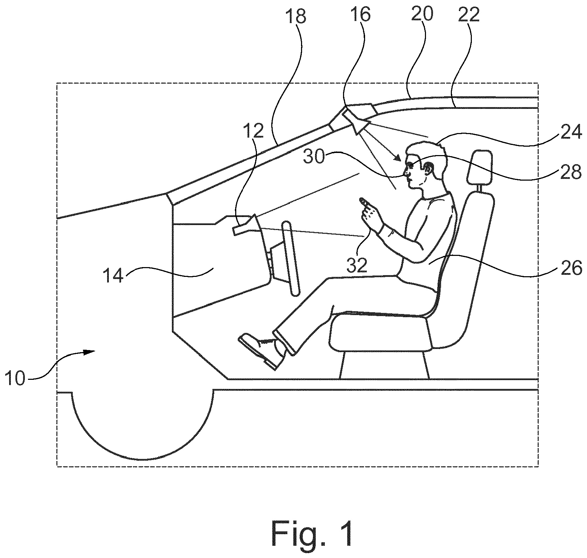

Ferner umfasst das Kraftfahrzeug 10 eine Mehrzahl von in Fig. 1 nicht dargestellten Anzeigevorrichtungen, die beispielsweise im Armaturenbrett 14 integriert sein können, als Head-Up-Display auf der Windschutzscheibe 18 ausgeführt sein können oder in einem Dachhimmel 22 oder anderen Innenverkleidungsteilen des Kraftfahrzeugs 10, insbesondere im Bereich der Fahrzeugtüren, verbaut sein können.

Um eine berührungslose Steuerung der Anzeigevorrichtungen zu ermöglichen, wird mit der Kamera 16 z.B. die Position eines Kopfes 24 eines Fahrzeuginsassen 26, im gezeigten Beispiel des Fahrers des Kraftfahrzeugs 10, beobachtet. Die Kamera 16 erfasst dabei beispielsweise sowohl die Augen 28 des Fahrzeuginsassen 26 als auch seinen gesamten Kopf 24. Die Überwachung der Position der Augen 28 kann durch Bilderkennung der Augen 28 als Ganzes erfolgen. Es kann jedoch auch eine feinere Analyse durchgeführt werden, bei der die Position von Pupillen oder Iris der Augen 28 beobachtet wird. Zur Bestimmung der Position und Orientierung des Kopfes 24 kann die Kamera 16 besonders leicht zu erkennende Teile des Kopfes, wie beispielsweise die Nase 30 des Fahrzeuginsassen 26, beobachten.

Die weitere Kamera 12 im Armaturenbrett 14 registriert ferner die Position und Bewegung einer Hand 32 des Fahrzeuginsassen 26.

Bei den Kameras 12, 16 handelt es sich bevorzugt um Tiefenbildkameras, besonders bevorzugt um sogenannte Time-of-flight-Kameras, die zu jedem Bildpunkt eine Entfernungsinformation mitliefern, sodass die Bilderkennung besonders präzise wird.

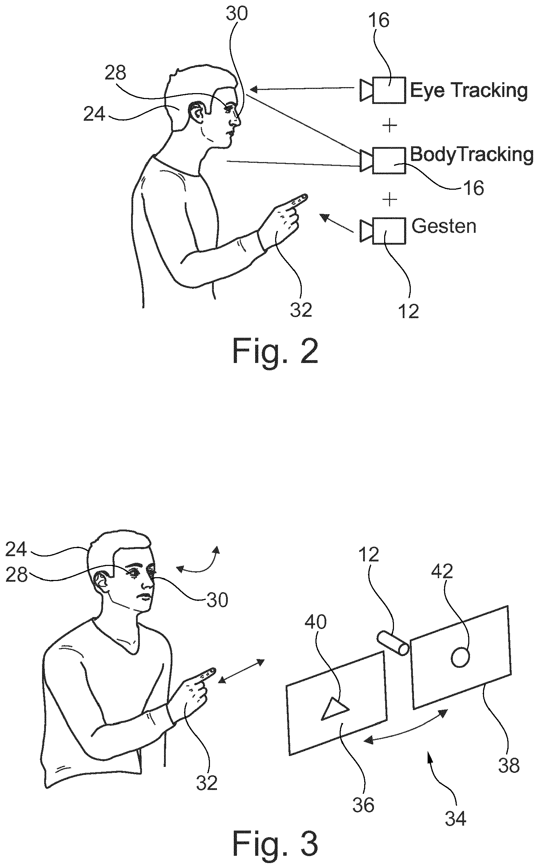

Die Kombination aus der Erfassung von Kopfposition, Augenposition und Gesten des Fahrzeuginsassen 26 ermöglicht, wie im Folgenden anhand der Figuren 2 bis 4 erläutert, eine besonders präzise berührungslose Steuerung der Anzeigevorrichtung des Kraftfahrzeugs 10.

Fig. 2 fasst nochmals zusammen, wie mittels dreier Kameras 12 und 16 sowohl Gesten als auch Körper- und Kopf- bzw. Augenhaltung des Fahrzeuginsassen 26 erfasst werden. Für das beschriebene Verfahren ist dabei die Erfassung aller genannten Parameter besonders vorteilhaft.

Fig. 3 zeigt, wie eine Anzeigevorrichtung 34 mit einer rechten Anzeigefläche 36 und einer linken Anzeigefläche 38 bedient werden kann. Auf der rechten Anzeigefläche 36 ist dabei ein erstes Anzeigeelement 40, beispielsweise ein Icon, angeordnet. Die linke Anzeigefläche 38 zeigt ein zweites Anzeigeelement 42, bei dem es sich ebenfalls um ein Icon, einen Menüeintrag oder dergleichen handeln kann.

Will der Fahrzeuginsasse 26 nun eine Bedienhandlung ausführen, so richtet er beispielsweise zunächst seinen Blick auf eine der beiden Anzeigeflächen 36, 38, die das Ziel seiner Bedienhandlung sein soll. So kann er beispielsweise auf die Anzeigefläche 36 schauen, und die Blickrichtung wird über seine Augenposition mit einer ersten Kamera 16 erfasst. Gleichzeitig wird überprüft, ob die Körperhaltung des Fahrzeuginsassen 26 mit seiner Blickrichtung übereinstimmt, um die Erkennung der auszuwählenden Anzeigefläche 36 zu verifizieren. Dazu erfasst eine zweite Kamera 16 die Körperorientierung. Führt der Fahrzeuginsasse 26 nun eine von der dritten Kamera 12 erfassbare Geste mit seiner Hand 32 aus, im gezeigten Beispiel eine seitliche Wischbewegung zwischen den Anzeigeflächen 36, 38, so wird das durch den Blick ausgewählte und durch die Körperorientierung verifizierte Anzeigeelement 40 von der ausgewählten Anzeigefläche 36 auf die andere Anzeigefläche 38 verschoben.

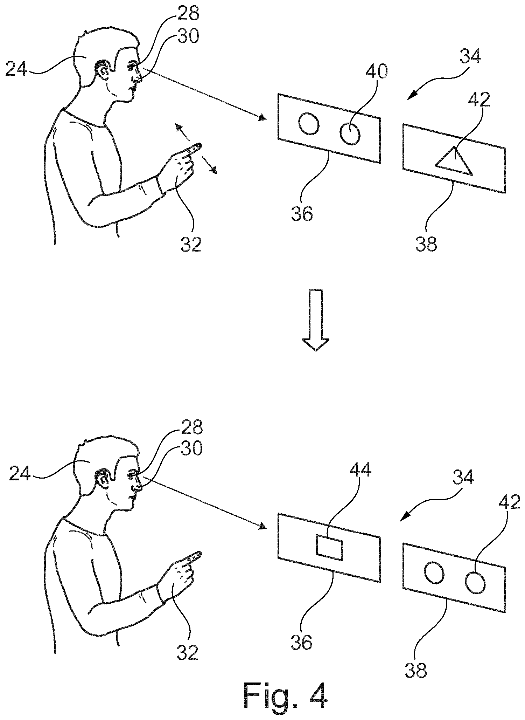

Fig. 4 zeigt dies nochmals im Detail. Hier wird der gesamte Inhalt der Anzeigefläche 36 auf die beschriebene Art auf die Anzeigefläche 38 verschoben, wodurch ein neues, vorbestimmtes Anzeigeelement 44 auf der nun freigewordenen Anzeigefläche 36 angezeigt wird. Ein Verschieben des gesamten Inhalts der Anzeigefläche 36 auf die Anzeigefläche 38 ist jedoch nicht notwendigerweise immer der Fall. Es ist auch möglich, dass auf die beschriebene Art lediglich ein Anzeigeelement 40, 42, 44 zwischen den Anzeigeflächen 36, 38 verschoben wird, oder dass weitere Aktionen bezüglich des ausgewählten Anzeigeelements 40, 42, 44 durchgeführt werden. Beispielsweise kann durch das Verschieben eines einzelnen Icons auf eine neue Anzeigefläche 36, 38 ein mit diesem Icon assoziiertes Programm in der neu ausgewählten Anzeigefläche 36, 38 aktiviert werden, oder auch ähnliche weitere Bedienfunktionen durchgeführt werden. Denkbar ist hier auch die Auswahl eines Menüeintrags, die Verstellung von Schiebereglern, wie beispielsweise für die Lautstärke eines Unterhaltungssystems, die Auswahl aus einer Liste, wie beispielsweise einer Liste von Telefonnummern für ein integriertes Telefon oder dergleichen.

Hierzu können auch noch weitere berührungslose Eingaben erfasst und ausgewertet werden. Denkbar ist beispielsweise eine zusätzliche Spracherkennung oder auch die Erkennung von Gehirnaktivitäten des Benutzers im Sinne eines Gehirn-Maschine-Interface.

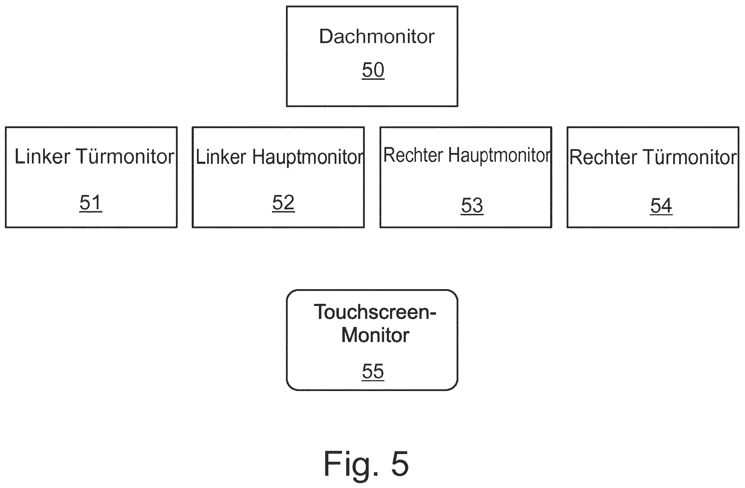

Ein erfindungsgemäßes Verfahren wird im Anschluss mit Bezug auf Fig. 5 erläutert, in der eine Anzeigevorrichtung die einen Touchscreen-Monitor 55 auf einer Mittelkonsole, einen Monitor 51 in der Innenverkleidung einer linken Fahrzeugtür, zwei Monitore im Bereich des Armaturenbretts, nämlichen einen linken Hauptmonitor 52 und einen rechten Hauptmonitor 53, einen Monitor 54 in der Innenverkleidung einer rechten Fahrzeugtür und einen Monitor 50 in einem Dachhimmel umfasst. Jeder der Monitore 50 - 55 bietet dabei eine Anzeigefläche dar.

Der Touchscreen-Monitor 55 stellt eine erste Anzeigefläche zur Verfügung, auf der von einem Fahrzeuginsassen ein Anzeigeelement durch eine erste Eingabehandlung in Form einer Berührung ausgewählt werden kann. Nach dieser Auswahl kann das Anzeigeelement auf einen der fünf anderen Monitore verschoben werden, bspw. auf den linken Hauptmonitor 52, und zwar durch eine zweite, dieses Mal berührungslose Eingabehandlung, wie in Form einer Geste. Vom linken Hauptmonitor 52 kann das Anzeigeelement auf jeden der anderen Monitors 50, 51, 53 oder 54 und auch zurück auf den Touchscreen-Monitor 55 berührungslos verschoben werden, wie bereits mit Bezug auf die Figuren 1 bis 4 beschrieben.

Ein Verschieben des zumindest einen ausgewählten Anzeigeelements ist in einem ersten Verschiebeschritt innerhalb der ersten Anzeigefläche auf dem Touchscreen-Monitor 55, in einem zweiten Verschiebeschritt von der ersten Anzeigefläche auf die zumindest eine zweite Anzeigefläche des linken Hauptmonitors 52 und in einem dritten Verschiebeschritt innerhalb der zweiten Anzeigefläche möglich, wobei jede Verschiebung berührungslos über Gesten bewirkt und auch in Echtzeit auf den jeweiligen Monitoren 55, 52 visualisiert werden kann. Das Verschieben des Anzeigeelements kann so von dem Fahrzeuginsassen beobachtet werden, was der Kontrolle der Bedienung an sich dient. Um die Bedienung möglichst intuitiv zu gestalten, lassen sich die Dauer und auch die Geschwindigkeit der jeweiligen berührungslosen Eingabe, z. B. in Form einer wischartigen Geste, durch eine entsprechende Dauer und Geschwindigkeit des Verschiebens des Anzeigeelements auf den Monitoren 55, 52 beobachten. Beim zweiten Verschiebeschritt von der ersten Anzeigefläche auf die zweite Anzeigefläche kommt es dabei für die Dauer des Wischens von dem ersten Monitor 55 zu dem zweiten Monitor 52 zu einem Anhalten der Bewegung des Anzeigeelements an einem Randbereich der ersten Anzeigefläche benachbart zu der zweite Anzeigefläche, um möglichst genau die Bewegung der Geste zu visualisieren.

### Bezugszeichenliste

- 10: Kraftfahrzeug
- 12: Kamera
- 14: Armaturenbrett
- 16: Kamera
- 17: Windschutzscheibe
- 20: Dach
- 22: Dachhimmel
- 24: Kopf
- 26: Fahrzeuginsasse
- 28: Auge
- 30: Nase
- 32: Hand
- 34: Anzeigevorrichtung
- 36, 38: Anzeigefläche
- 40, 42, 44: Anzeigeelement
- 50: Dachmonitor
- 51: Linker Türmonitor
- 52: Linker Hauptmonitor
- 53: Rechter Hauptmonitor
- 54: Rechter Türmonitor
- 55: Touchscreen-Monitor

## Patentansprüche

1. Verfahren zum Betreiben einer Anzeigevorrichtung (34) für ein Kraftfahrzeug (10), welches eine Mehrzahl von Anzeigeflächen (36, 38, 50 - 55) umfasst, bei dem
- zum Auswählen zumindest eines Anzeigeelements (40) auf einer ersten Anzeigefläche (55) eine erste Eingabehandlung eines Benutzers (26) in Form einer Berührung erfasst wird; und
- zum zumindest einmaligen Verschieben des zumindest einen ausgewählten Anzeigeelements (40) von der ersten Anzeigefläche (55) auf zumindest eine zweite Anzeigefläche (36, 38, 50 - 54) zumindest eine zweite berührungslose Eingabehandlung des Benutzers (26) erfasst wird,
**dadurch gekennzeichnet, dass**
der Schritt des Auswählens des zumindest einen Anzeigeelements (40) Folgendes umfasst:
• ein Vorauswählen des zumindest einen Anzeigeelements (40) durch ein einmaliges Antippen des zumindest einen Anzeigeelements (40),
• ein optisches Hervorheben des vorausgewählten zumindest einen Anzeigeelements (40), und
• ein Bestätigen des vorausgewählten zumindest einen Anzeigeelements (40) durch eine zumindest eine bestimmte Zeitdauer dauernde Berührung oder in Form eines wiederholten Antippens, und
das Verschieben des zumindest einen ausgewählten Anzeigeelements (40) einen ersten Verschiebeschritt innerhalb der ersten Anzeigefläche (55), einen zweiten Verschiebeschritt von der ersten Anzeigefläche (55) auf die zumindest eine zweite Anzeigefläche (36, 38, 50 - 54) und einen dritten Verschiebeschritt innerhalb der zumindest einen zweiten Anzeigefläche (36, 38, 50 - 54) umfasst, wobei
• der erste Verschiebeschritt auf der ersten Anzeigefläche (55) visualisiert wird,
• der zweiten Verschiebeschritt von der ersten Anzeigefläche (55) auf die zumindest eine zweite Anzeigefläche (36, 38, 50 - 54) auf der ersten Anzeigefläche (55) visualisiert wird, und
• der dritte Verschiebeschritt auf der zumindest einen zweiten Anzeigefläche (36, 38, 50 - 54) visualisiert wird.

2. Verfahren nach Anspruch 1, bei welchem
eine Vielzahl von zweiten berührungslosen Eingabehandlungen bereitgestellt wird, und/oder
eine zweite berührungslose Eingabehandlung durch eine dritte berührungslose Eingabehandlung verifizierte wird,
wobei sich vorzugsweise die zweiten und dritten berührungslosen Eingabehandlungen voneinander unterscheiden und/oder die zweiten und/oder dritten berührungslosen Eingabehandlungen von dem Benutzer (26) ausgewählt und/oder geändert werden können.

3. Verfahren nach Anspruch 2, bei welchem
die berührungslosen Eingabehandlungen bestimmt werden durch
o eine für den Kopf (24) des Benutzers (26) charakteristische Größe, insbesondere umfassend eine Blickrichtung, eine Augenposition, eine Irisposition, eine Pupillenposition, eine Nasenposition, eine Kopfhaltung, eine Kopfposition, eine Kopforientierung und/oder einen Gesichtsausruck des Benutzers (26), oder
o eine für den Rumpf des Benutzers (26) charakteristische Größe, insbesondere umfassend eine Körperhaltung, eine Körperposition, eine Körperorientierung, eine Schulterposition und/oder eine Schulterorientierung des Benutzers (26), oder
o eine für eine Hand (32) und/oder zumindest einen Finger des Benutzers (26) charakteristische Größe, insbesondere umfassend eine Geste, wie ein Vorbeistreichen, Annähern, Wegbewegen, Finger-Spreizen, Finger-Krümmen, Finger-Berühren und/oder Faust-Bilden, und/oder eine Finger- und/oder Hand (32)-Position und/oder Finger- und/oder Hand (32)-Orientierung, oder
o eine für den Mund des Benutzers (26) charakteristische Größe, insbesondere umfassend eine Lippenbewegung, ein Geräusch und/oder ein Sprachbefehl.

4. Verfahren nach Anspruch 3, bei welchem
zum Erfassen der berührungslosen Eingabehandlung zumindest eine für die Hand (32), den oder die Finger charakteristische Größe erfasst wird.

5. Verfahren nach einem der vorhergehenden Ansprüche, bei welchem als weitere berührungslose Eingabehandlung eine Gehirnaktivität des Benutzers (26) erfasst wird.

6. Verfahren nach einem der vorhergehenden Ansprüche, bei welchem zum zumindest einmaligen Verschieben des zumindest einen ausgewählten Anzeigeelements (40) innerhalb der ersten Anzeigefläche (55) zumindest eine vierte berührungslose Eingabehandlung des Benutzers (26) erfasst wird, vorzugsweise in Form eines Vorbeistreichens oder über ein Drag-und-Drop.

7. Verfahren nach einem der vorhergehenden Ansprüche, bei welchem
das zumindest eine Anzeigeelement (40) auf der ersten Anzeigefläche (55) ausgewählt wird, wenn die erste Eingabehandlung innerhalb einer ersten Zeitspanne erfasst wird, und/oder
das zumindest eine ausgewählte Anzeigeelement (40) von der ersten Anzeigefläche (55) auf eine zweite Anzeigefläche (36, 38, 50 - 54) verschoben wird, wenn die zweite berührungslose Eingabehandlung innerhalb einer zweiten Zeitspanne erfasst wird, und/oder
das zumindest eine ausgewählte Anzeigeelement (40) innerhalb der ersten Anzeigefläche (55) verschoben wird, wenn die vierte Eingabehandlung innerhalb einer vierten Zeitspanne erfasst wird.

8. Verfahren nach einem der vorhergehenden Ansprüche, bei welchem das Verschieben rückgängig gemacht wird durch eine fünfte berührungslose Eingabehandlung des Benutzers (26), die sich vorzugsweise von der zweiten, dritten und/oder vierten Eingabehandlung des Benutzers (26) unterscheidet, oder durch Betätigung einer Eingabeeinrichtung.

9. Verfahren nach einem der vorhergehenden Ansprüche, bei welchem beim Verschieben des zumindest einen Anzeigeelements (40) dasselbe vergrößert wird und/oder eine Zusatzinformation zu dem zumindest einen Anzeigeelement (40) angezeigt wird und/oder in ein Untermenü zu dem zumindest einen Anzeigeelement (40) gewechselt wird.

10. Verfahren nach einem der Ansprüche 1 bis 8, bei welchem beim Verschieben des zumindest einen Anzeigeelements (40) dasselbe verkleinert wird und/oder weniger Information zu dem zumindest einen Anzeigeelement (40) angezeigt wird und/oder das zumindest einen Anzeigeelement (40) aus der Blickrichtung des Benutzers (26) und/oder in einen Hintergrund gelangt.

11. Verfahren nach einem der vorhergehenden Ansprüche, bei welchem der erste Verschiebeschritt auf der ersten Anzeigefläche (55) und/oder der dritte Verschiebeschritt auf der zumindest einen zweiten Anzeigefläche (36, 38, 50 - 54) in Echtzeit und/oder abhängig von der Dauer und/oder Geschwindigkeit der zweiten berührungslosen Eingabehandlung visualisiert wird.

12. Verfahren nach Anspruch 11, bei welchem
der zweiten Verschiebeschritt von der ersten Anzeigefläche (55) auf die zumindest eine zweite Anzeigefläche (36, 38, 50 - 54) in einem Randbereich auf der ersten Anzeigefläche (55) benachbart zu der zumindest einen zweiten Anzeigefläche (36, 38, 50 - 54) visualisiert wird, vorzugsweise in Echtzeit und/oder abhängig von der Dauer und/oder Geschwindigkeit der zweiten berührungslosen Eingabehandlung.

13. Verfahren nach einem der Ansprüche 11 oder 12, bei welchem der erste, zweite und/oder dritte Verschiebeschritt durch eine optische Hervorhebung, wie durch ein Aufblinken, ein Vergrößern, ein Umkasteln, ein Hin- und Herbewegen und/oder eine Markierung, und/oder eine Darstellung, insbesondere repräsentierend eine Straße, einen Pfad, einen Fluss, eine Brücke, einen Tunnel und/oder ein Tor, visualisiert wird.

14. Verfahren nach einem der vorhergehenden Ansprüche, bei welchem das optische Hervorheben des vorausgewählten zumindest einen Anzeigeelements (40) durch ein Aufblinken, ein Vergrößern, ein Umkasteln, ein Hin- und Herbewegen und/oder eine Markierung erfolgt.

15. Kraftfahrzeug (10) mit einer Anzeigevorrichtung (34) mit einer Mehrzahl von Anzeigeflächen (36, 38, 50 - 55), zumindest einem Sensor zur Erfassung einer berührungslosen Eingabehandlung und einer Steuereinrichtung, welche zum Durchführen eines Verfahrens nach einem der vorhergehenden Ansprüche ausgebildet ist.

16. Kraftfahrzeug (10) nach Anspruch 15, bei welchem
die erste Anzeigefläche (55) von einem Touchscreen-Monitor, insbesondere auf der Mittelkonsole des Kraftfahrzeugs (10), umfasst ist.

17. Kraftfahrzeug (10) nach Anspruch 15 oder 16, bei welchem
die zumindest eine zweite Anzeigefläche (36, 38, 50 - 54) eine Projektionsfläche, ein Head-Up-Display, ein flexibles OLED-Display, ein Flüssigkristalldisplay, lichttechnisches Gewebe und/oder lichttechnische Folien, insbesondere in Form eines Dachhimmelmonitors, Innenverkleidungsteilmonitors, eines linken Türmonitor, eines linken Hauptmonitors, eines rechten Hauptmonitors und/oder eines rechten Türmonitors, umfasst, und/oder
die zumindest eine zweite Anzeigefläche (36, 38, 50 - 54) in einem Armaturenbrett (14), auf einer Windschutzscheibe (18), in einem Dachhimmel (22) und/oder in der Mittelkonsole angeordnet ist,
wobei vorzugsweise der linke und rechte Hauptmonitor im Armaturenbrett (14) bereitgestellt sind.

18. Kraftfahrzeug (10) nach einem der Ansprüche 15 bis 17, bei welchem das zumindest eine Anzeigeelement (40, 42, 44) ein Icon und/oder ein Menüeintrag und/oder ein Gesamtinhalt der ersten Anzeigefläche (55) und/oder ein ausgewählter Teilbereich der ersten Anzeigefläche (55) ist.

## Claims

1. A method for operating a display device (34) for a motor vehicle (10), which comprises a plurality of display surfaces (36, 38, 50-55), in which
- in order to select at least one display element (40) on a first display surface (55), a first input action of a user (26) in the form of contact is detected,
- in order to move the at least one selected display element (40) at least once from the first display surface (55) to at least one second display surface (36, 38, 50-54), at least one second non-contact input action of the user (26) is detected,
**characterized in that**
the step of selecting the at least one display element (40) comprises:
• preselecting the at least one display element (40) by tapping the at least one display element (40) once,
• visually highlighting the preselected at least one display element (40), and
• confirming the preselected at least one display element (40) by means of contact lasting at least a certain period of time or in the form of a repeated tap, and
the moving of the at least one selected display element (40) comprises a first movement step within the first display surface (55), a second movement step from the first display surface (55) to the at least one second display surface (36, 38, 50-54), and a third movement step within the at least one second display surface (36, 38, 50-54), wherein
• the first movement step is visualized on the first display surface (55),
• the second movement step from the first display surface (55) to the at least one second display surface (36, 38, 50-54) is visualized on the first display surface (55), and
• the third movement step is visualized on the at least one second display surface (36, 38, 50-54).

2. The method according to Claim 1, in which
a plurality of second non-contact input actions is provided, and/or
a second non-contact input action is verified by a third non-contact input action, wherein preferably the second and third non-contact input actions differ from one another and/or the second and/or third non-contact input actions can be selected and/or changed by the user (26).

3. The method according to Claim 2, in which
the non-contact input actions are determined by
• a characteristic quantity for the head (24) of the user (26), in particular comprising a gaze direction, an eye position, an iris position, a pupil position, a nose position, a head posture, a head position, a head orientation and/or a facial expression of the user (26), or
• a characteristic quantity for the torso of the user (26), in particular comprising a body posture, a body position, a body orientation, a shoulder position and/or a shoulder orientation of the user (26), or
• a characteristic quantity for a hand (32) and/or at least one finger of the user (26), in particular comprising a gesture, such as swiping, moving closer, moving away, finger spreading, finger curling, finger touching and/or fist forming, and/or a finger and/or hand (32) position and/or finger and/or hand (32) orientation, or
• a characteristic quantity for the mouth of the user (26), in particular comprising a lip movement, a sound and/or a voice command.

4. The method according to Claim 3, in which
in order to detect the contact-free input action, at least one characteristic quantity for the hand (32) or the finger(s) is detected.

5. The method according to any of the preceding claims, in which
a brain activity of the user (26) is detected as a further non-contact input action.

6. The method according to any of the preceding claims, in which
in order to move the at least one selected display element (40) at least once within the first display surface (55), at least one fourth non-contact input action of the user (26) is detected, preferably in the form of a swipe or by means of a drag-and-drop.

7. The method according to any of the preceding claims, in which
the at least one display element (40) on the first display surface (55) is selected when the first input action is detected within a first time period, and/or
the at least one selected display element (40) is moved from the first display surface (55) to a second display surface (36, 38, 50-54) when the second non-contact input action is detected within a second time period, and/or
the at least one selected display element (40) is moved within the first display surface (55) when the fourth input action is detected within a fourth period.

8. The method according to any of the preceding claims, in which
the movement is reversed by a fifth non-contact input action of the user (26), said action preferably being different from the second, third and/or fourth input action of the user (26), or by actuation of an input device.

9. The method according to any of the preceding claims, in which
when the at least one display element (40) is moved, said display element is enlarged and/or additional information about the at least one display element (40) is displayed and/or is changed to a sub-menu for the at least one display element (40).

10. The method according to any of Claims 1 to 8, in which
when the at least one display element (40) is moved, said display element is reduced in size and/or less information about the at least one display element (40) is displayed and/or the at least one display element (40) moves out of the viewing direction of the user (26) and/or into a background.

11. The method according to any of the preceding claims, in which
the first movement step is visualized on the first display surface (55) and/or the third movement step is visualized on the at least one second display surface (36, 38, 50-54) in real time and/or depending on the duration and/or speed of the second non-contact input action.

12. The method according to Claim 11, in which
the second movement step from the first display surface (55) to the at least one second display surface (36, 38, 50-54) is visualized in an edge region on the first display surface (55), adjacently to the at least one second display surface (36, 38, 50-54), preferably in real time and/or depending on the duration and/or speed of the second non-contact input action.

13. The method according to Claim 11 or 12, in which
the first, second and/or third movement step is visualized by visual highlighting, such as by flashing, enlargement, surrounding with a box, back-and-forth movement and/or marking, and/or by an illustration, in particular representing a road, a path, a river, a bridge, a tunnel and/or a gate.

14. The method according to any of the preceding claims, in which
the visual highlighting of the preselected at least one display element (40) is performed by flashing, enlargement, surrounding with a box, back-and-forth movement and/or marking.

15. A motor vehicle (10) having a display device (34) having a plurality of display surfaces (36, 38, 50-55), at least one sensor for detecting a non-contact input action and a control device, which is designed to carry out a method according to any of the preceding claims.

16. The motor vehicle (10) according to Claim 15, in which
the first display surface (55) is comprised of a touch screen monitor, in particular on the center console of the motor vehicle (10).

17. The motor vehicle (10) according to Claim 15 or 16, in which
the at least one second display surface (36, 38, 50-54) comprises a projection surface, a head-up display, a flexible OLED display, a liquid crystal display, light technical fabric and/or light technical films, in particular in the form of a headlining monitor, interior trim part monitor, a left-hand door monitor, a left-hand main monitor, a right-hand main monitor and/or a right-hand door monitor, and/or
the at least one second display surface (36, 38, 50-54) being arranged in a dashboard (14), on a windshield (18), in a headliner (22) and/or in the center console,
wherein the left-hand and right-hand main monitors preferably being provided in the dashboard (14).

18. The motor vehicle (10) according to any of Claims 15 to 17, in which
the at least one display element (40, 42, 44) is an icon and/or a menu item and/or an overall content of the first display surface (55) and/or a selected region of the first display surface (55).

## Revendications

1. Procédé de fonctionnement d'un dispositif d'affichage (34) pour un véhicule automobile (10) comprenant une pluralité de surfaces d'affichage (36, 38, 50 - 55), où
- pour la sélection d'au moins un élément d'affichage (40) sur une première surface d'affichage (55), une première manipulation d'entrée d'un utilisateur (26) est détectée sous la forme d'un contact ; et
- pour déplacer au moins une fois ledit au moins un élément d'affichage (40) sélectionné de la première surface d'affichage (55) vers au moins une deuxième surface d'affichage (36, 38, 50 - 54), au moins une deuxième manipulation d'entrée sans contact de l'utilisateur (26) est détectée,
**caractérisé en ce que**
l'étape de sélection dudit au moins un élément d'affichage (40) comprend:
• une présélection dudit au moins un élément d'affichage (40) par tapotement unique dudit au moins un élément d'affichage (40),
• une mise en évidence optique dudit au moins un élément d'affichage (40) présélectionné, et
• une confirmation dudit au moins un élément d'affichage (40) présélectionné par contact pendant au moins une durée définie ou sous forme de tapotement répété, et
le déplacement dudit au moins un élément d'affichage (40) sélectionné comprend un premier pas de déplacement à l'intérieur de la première surface d'affichage (55), un deuxième pas de déplacement de la première surface d'affichage (55) vers ladite au moins une deuxième surface d'affichage (36, 38, 50 - 54) et un troisième pas de déplacement à l'intérieur de ladite au moins une deuxième surface d'affichage (36, 38, 50 - 54), où
• le premier pas de déplacement est visualisé sur la première surface d'affichage (55),
• le deuxième pas de déplacement de la première surface d'affichage (55) vers ladite au moins une deuxième surface d'affichage (36, 38, 50 - 54) est visualisé sur la première surface d'affichage (55), et
• le troisième pas de déplacement est visualisé sur ladite au moins une deuxième surface d'affichage (36, 38, 50 - 54).

2. Procédé selon la revendication 1, où
une pluralité de deuxièmes manipulations d'entrée sans contact est prévue, et/ou une deuxième manipulation d'entrée sans contact est vérifiée par une troisième manipulation d'entrée sans contact,
la deuxième et la troisième manipulations d'entrée sans contact se distinguant préférentiellement l'une de l'autre et/ou la deuxième et/ou la troisième manipulations d'entrée sans contact pouvant être sélectionnées et/ou modifiées par l'utilisateur (26).

3. Procédé selon la revendication 2, où
les manipulations d'entrée sans contact sont déterminées par
• une grandeur caractéristique pour la tête (24) de l'utilisateur (26), comprenant en particulier une direction de regard, une position d'oeil, une position d'iris, une position de pupille, une position de nez, un maintien de tête, une position de tête, une orientation de tête et/ou une expression du visage de l'utilisateur (26),
• ou une grandeur caractéristique pour le torse de l'utilisateur (26), comprenant en en particulier un maintien de torse, une position du corps, une orientation du corps, une position d'épaule et/ou une orientation d'épaule de l'utilisateur (26),
• ou une grandeur caractéristique pour une main (32) et/ou au moins un doigt de l'utilisateur (26), comprenant en particulier un geste, tel que passage, rapprochement, éloignement, écartement de doigts, courbure de doigts, contact de doigts et/ou fermeture de poing, et/ou une position de doigt et/ou de main (32) et/ou une orientation de doigt et/ou de main (32),
• ou une grandeur caractéristique pour la bouche de l'utilisateur (26), comprenant en particulier un mouvement de lèvre, un bruit et/ou une instruction vocale.

4. Procédé selon la revendication 3, où,
pour la détection de la manipulation d'entrée sans contact, au moins une grandeur caractéristique pour la main (32), le ou les doigts, est détectée.

5. Procédé selon l'une quelconque des revendications précédentes, où
une activité cérébrale de l'utilisateur (26) est détectée comme autre manipulation d'entrée sans contact.

6. Procédé selon l'une quelconque des revendications précédentes, où
pour déplacer au moins une fois ledit au moins un élément d'affichage (40) sélectionné à l'intérieur de la première surface d'affichage (55), au moins une quatrième manipulation d'entrée sans contact de l'utilisateur (26) est détectée, préférentiellement sous la forme d'un passage ou au moyen d'un glisser-déposer.

7. Procédé selon l'une quelconque des revendications précédentes, où
ledit au moins un élément d'affichage (40) est sélectionné sur la première surface d'affichage (55), lorsque la première manipulation d'entrée est détectée à l'intérieur d'un premier intervalle temporel, et/ou
ledit au moins un élément d'affichage (40) sélectionné est déplacé de la première surface d'affichage (55) vers une deuxième surface d'affichage (36, 38, 50 - 54), lorsque la deuxième manipulation d'entrée sans contact est détectée à l'intérieur d'un deuxième intervalle temporel, et/ou
ledit au moins un élément d'affichage (40) sélectionné est déplacé dans l'intérieur de la première surface d'affichage (55), lorsque la quatrième manipulation d'entrée est détectée à l'intérieur d'un quatrième intervalle temporel.

8. Procédé selon l'une quelconque des revendications précédentes, où
le déplacement est annulé par une cinquième manipulation d'entrée sans contact de l'utilisateur (26), laquelle se distingue préférentiellement de la deuxième, de la troisième et/ou de la quatrième manipulation d'entrée de l'utilisateur (26), ou par activation d'un dispositif d'entrée.

9. Procédé selon l'une quelconque des revendications précédentes, où
lors du déplacement dudit au moins un élément d'affichage (40), celui-ci est agrandi et/ou une information additionnelle est affichée sur ledit au moins un élément d'affichage (40) et/ou un sous-menu est ouvert sur ledit au moins un élément d'affichage (40).

10. Procédé selon l'une quelconque des revendications 1 à 8, où
lors du déplacement dudit au moins un élément d'affichage (40), celui-ci est réduit et/ou moins d'informations sont affichées sur ledit au moins un élément d'affichage (40) et/ou ledit au moins un élément d'affichage (40) sort de la direction du regard de l'utilisateur (26) et/ou passe à l'arrière-plan.

11. Procédé selon l'une quelconque des revendications précédentes, où
le premier pas de déplacement sur la première surface d'affichage (55) et/ou le troisième pas de déplacement sur ladite au moins une deuxième surface d'affichage (36, 38, 50 - 54) sont visualisés en temps réel et/ou en fonction de la durée et/ou de la vitesse de la deuxième manipulation d'entrée sans contact.

12. Procédé selon la revendication 11, où
le deuxième pas de déplacement de la première surface d'affichage (55) vers ladite au moins une deuxième surface d'affichage (36, 38, 50 - 54) est visualisé dans une plage marginale sur la première surface d'affichage (55), contiguë à ladite au moins une deuxième surface d'affichage (36, 38, 50 - 54), préférentiellement en temps réel et/ou en fonction de la durée et/ou de la vitesse de la deuxième manipulation d'entrée sans contact.

13. Procédé selon la revendication 11 ou la revendication 12, où
le premier, le deuxième et/ou le troisième pas de déplacement sont visualisés par une mise en valeur optique, telle que clignotement, agrandissement, encadrement, déplacement en va-et-vient et/ou marquage, et/ou par une illustration, en particulier représentant une route, un chemin, une rivière, un pont, un tunnel et/ou une porte.

14. Procédé selon l'une quelconque des revendications précédentes, où
la mise en valeur optique dudit au moins un élément d'affichage (40) présélectionné est exécutée par clignotement, agrandissement, encadrement, déplacement en va-et-vient et/ou par marquage.

15. Véhicule automobile (10), avec un dispositif d'affichage (34) comprenant une pluralité de surfaces d'affichage (36, 38, 50 - 55), au moins un capteur pour la détection d'une manipulation d'entrée sans contact et un dispositif de commande configuré pour l'exécution d'un procédé selon l'une quelconque des revendications précédentes.

16. Véhicule automobile (10) selon la revendication 15, où
la première surface d'affichage (55) est comprise d'un écran tactile, en particulier sur la console centrale du véhicule automobile (10).

17. Véhicule automobile (10) selon la revendication 15 ou la revendication 16, où
ladite au moins une deuxième surface d'affichage (36, 38, 50 - 54) comprend une surface de projection, un afficheur tête haute, un écran OLED flexible, un écran à cristaux liquides, un tissu optique et/ou des films optiques, en particulier sous la forme d'un écran de ciel de toit, d'un écran d'élément d'habillage intérieur, d'un écran de porte gauche, d'un écran principal gauche, d'un écran principal droit et/ou d'un écran de porte droite, et/ou
ladite au moins une deuxième surface d'affichage (36, 38, 50 - 54) est disposée dans un tableau de bord (14), sur un pare-brise (18), dans un ciel de toit (22) et/ou dans la console centrale,
les écrans principaux gauche et droit étant préférentiellement prévus dans le tableau de bord (14).

18. Véhicule automobile (10) selon l'une des revendications 15 à 17, où
ledit au moins un élément d'affichage (40, 42, 44) est une icône et/ou une entrée de menu et/ou un contenu d'ensemble de la première surface d'affichage (55) et/ou une zone partielle sélectionnée de la première surface d'affichage (55).
